# DEMANDE DE BREVET EUROPEEN

(11) **EP 2 090 428 A1**
(43) Date de publication de la demande: **19.08.2009**
(21) Numéro de dépôt: 09151839.9
(22) Date de dépôt: 02.02.2009
(51) Int. Cl.: B32B 17/10, C03C 27/12, B60J 7/043, B62D 25/06

(54) **Vitrage a hautes performances thermiques pour véhicule, en particulier pour pavillon de véhicule automobile**

(30) Priorité: 15.02.2008 FR 0850998
(71) Demandeur: Peugeot Citroën Automobiles SA, 78140 Vélizy-Villacoublay (FR)
(72) Inventeur: Fardel, Pierre Alain, 75015 PARIS (FR); David, Jérôme, 92360 MEUDON LA FORET (FR); Reino-Mignot, Elisabeth, 78114 MAGNY LES HAMEAUX (FR)
(74) Mandataire: Fernandez, Francis Lionel

(57) **Abrégé**

Il s'agit d'un vitrage feuilleté composé d'un verre extérieur (10), d'un verre intérieur (20), d'une couche intercalaire (30) entre les deux verres (10, 20) constituée d'au moins un film à base de PVB absorbant, le verre intérieur (20) étant revêtu sur sa face intérieure (4) d'une couche à basse émissivité (40).

Véhicules automobiles. Toits « cielos » des véhicules automobiles. Vitrages des pavillons des véhicules automobiles.

## Description

La présente invention concerne un vitrage à hautes performances thermiques pour un véhicule, en particulier pour un pavillon de véhicule automobile. Elle concerne également un véhicule, qui comporte un pavillon ou toit équipé d'un tel vitrage.

De nombreux pavillons de véhicules automobiles - appelés souvent pavillons ou toits « cielos » - sont formés d'un vitrage constitué de verres teintés laminés ensemble par un intercalaire PVB clair ou teinté (PVB est l'acronyme de « butyral de polyvinyle » ou « polyvinyl butyral »). Ces verres se brisent sans danger. Ils s'étoilent tout en restant en place. Les éclats et morceaux coupants restent collés à l'intercalaire.

Ces vitrages de pavillons de véhicules sont aujourd'hui systématiquement complétés d'un volet occulteur intérieur - désigné aussi « occulteur » dans la suite du présent texte -, qui permet de fermer visuellement et thermiquement l'ouverture donnée à l'extérieur par le vitrage lorsque l'utilisateur le souhaite. Cet occulteur peut être commandé manuellement ou électriquement, mais entraîne, dans tous les cas, un supplément de masse. Il entraîne également un supplément de volume, nécessaire à son implantation sous le vitrage.

Dans d'autres vitrages de véhicules, tels que les pare-brise, des couches fonctionnelles ont été introduites, de façon à améliorer les performances énergétiques tout en préservant une transmission lumineuse suffisante pour permettre l'homologation de ces vitrages. On connaît ainsi, par exemple, selon le document FR 2 755 962, un vitrage qui comprend un substrat transparent (par exemple un film de téréphtalate de polyéthylène) muni d'un empilement de couches minces comportant successivement : un premier revêtement en matériau diélectrique, une première couche fonctionnelle à propriétés de réflexion dans l'infrarouge, un second revêtement en matériau diélectrique, une seconde couche fonctionnelle à propriétés de réflexion dans l'infrarouge, notamment métallique, et un troisième revêtement en matériau diélectrique. La somme des épaisseurs de la première et de la seconde couche fonctionnelle est supérieure ou égale à 25 nm. Le rapport de l'épaisseur de la première couche fonctionnelle sur l'épaisseur de la seconde couche fonctionnelle est inférieur à 0,55. Les propriétés de ce vitrage tiennent principalement au caractère réfléchissant des couches fonctionnelles dans le proche infrarouge.

On connaît également, selon le document EP 1 857 424 par exemple, un verre feuilleté à film intercalaire qui comprend un composé résineux à base d'une résine d'acétal de polyvinyle, d'un agent colorant, d'un agent de protection aux rayons infrarouges et aussi d'un composé d'ester d'acide phosphorique dans une proportion donnée par rapport à la résine d'acétal de polyvinyle. Le document US 7 160 624 décrit un film intercalaire qui est enrichi dans sa formulation par un agent ayant une propriété d'absorption du rayonnement infrarouge dans le proche et/ou le moyen infrarouge, tel que l'oxyde d'indium dopé à l'étain (ITO).

Enfin, on connaît des vitrages utilisés dans le bâtiment, à verres dits « bas émissifs » ou encore « à basse émissivité », qui jouent sur la réduction de l'émissivité de la surface du vitrage pour limiter la transmission de chaleur vers l'intérieur tout en limitant également la perte de chaleur par rayonnement de l'intérieur vers l'extérieur par temps froid. Ce sont des verres « floats » sur lesquels on a déposé une fine couche d'oxyde métallique lors de leur fabrication. Cette couche permet de laisser entrer la lumière et la chaleur du soleil dans le bâtiment tout en retenant cette même chaleur de s'évaporer à l'extérieur, réduisant donc significativement les pertes d'énergie.

La nature uniquement teintée des pavillons ou « toits cielos » actuels permet uniquement de jouer sur la teinte des vitrages et trouver un compromis entre la transmission lumineuse et les performances énergétiques caractérisées uniquement par leur capacité d'absorption des rayonnements reçus (ultraviolets, visibles et infrarouges). Une haute performance thermique avec une telle conception s'accompagne d'une transmission lumineuse réduite, et d'une absorption d'énergie accrue dans le vitrage. Cette absorption d'énergie par le vitrage provoque son échauffement, et le vitrage re-émet cette énergie par rayonnement infrarouge aussi bien vers l'intérieur que vers l'extérieur du véhicule. Lorsque le véhicule est à l'arrêt, l'absence de convection forcée autour du vitrage a pour conséquence l'échauffement de l'habitacle du véhicule. Ainsi, la réduction de la transmission lumineuse provoquée par l'augmentation de la teinte du vitrage ne se traduit que par un gain assez faible sur le niveau de confort dans le véhicule, alors même que la luminosité apportée par le toit « cielo » peut être fortement diminuée.

Le but de la présente invention est de fournir un vitrage à hautes performances thermiques pour un véhicule, en particulier pour un pavillon de véhicule automobile, lequel nouveau vitrage présente des performances telles qu'elles permettent de se passer de l'occulteur pour garantir un bon niveau de confort thermique dans l'habitacle du véhicule et, par conséquent, des performances telles qu'elles permettent de réaliser une économie de fabrication du pavillon du véhicule et un gain en masse de ce dernier.

Un autre but de la présente invention est de fournir un tel vitrage perfectionné, qui permette de réaliser une réduction de la hauteur du véhicule pour une même habitabilité du véhicule.

C'est également un but de la présente invention de fournir un tel vitrage perfectionné, qui permette une réduction du maître couple du véhicule, et, combinée avec le gain de masse sur la superstructure, un gain en consommation de carburant du véhicule.

Pour parvenir à ces buts, la présente invention a pour objet un nouveau vitrage à hautes performances thermiques pour un véhicule, en particulier pour un pavillon de véhicule automobile, et ce nouveau vitrage est un vitrage feuilleté composé d'un verre extérieur, d'un verre intérieur, d'une couche intercalaire entre les deux verres constituée d'au moins un film à base de PVB absorbant, le verre intérieur étant revêtu sur sa face intérieure d'une couche à basse émissivité.

Selon un mode préféré de réalisation de l'invention, le verre extérieur et le verre intérieur sont des verres teintés.

En variante, le verre extérieur et le verre intérieur peuvent être des verres clairs, si la couche à basse émissivité est elle-même teintée.

La solution optimale privilégiée dans notre invention est l'utilisation d'un verre extérieur teinté, et d'un verre intérieur clair comme support de la couche basse émissivité.

De préférence, la couche intercalaire contient dans sa formulation au moins un agent absorbant le rayonnement infrarouge proche et/ou moyen.

De préférence également, la couche à basse émissivité présente une émissivité proche de 20% (+/- 5%)

Selon un mode préféré de réalisation de l'invention, le verre extérieur est un verre teinté vert ou gris, avec les performances suivantes :
- transmission lumineuse (TL) : 29%, et
- transmission énergétique (TE) : 25%.

Selon un deuxième mode préféré de réalisation de l'invention, le verre extérieur est un verre teinté vert ou gris, avec les performances suivantes :
- transmission lumineuse (TL) : 54%, et
- transmission énergétique (TE) : 40%.

Selon l'un ou l'autre de ces deux modes préférés de réalisation de l'invention, le verre intérieur est un verre clair, avec les performances suivantes :
- transmission lumineuse (TL) : 89%, et
- transmission énergétique (TE) : 87%.

Le verre intérieur peut être, par exemple, d'épaisseur sensiblement égale à 2,1 mm.

Le verre extérieur peut être, par exemple également, d'épaisseur sensiblement égale à 2,1 mm

La couche intercalaire présente une épaisseur suffisante pour assurer les performances mécaniques, thermiques et phoniques requises.

La couche intercalaire peut être constituée de plusieurs films dont un à base de PVB absorbant, laminés ensemble de manière à ce que ladite couche intercalaire assure les performances mécaniques, thermiques et phoniques requises.

(De manière préférentielle, la couche intercalaire est pourvue d'une teinte spécifique permettant d'ajuster la couleur en transmission et la transmission lumineuse du vitrage.)

De manière préférentielle également, la couche intercalaire est pourvue d'une absorption acoustique améliorée par l'utilisation d'un PVB « acoustique » dans sa composition.

L'invention a aussi pour objet un véhicule, en particulier un véhicule automobile, qui comporte un pavillon - ou toit « cielo » - dont le vitrage est conforme à celui décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue en coupe schématique d'un vitrage feuilleté permettant de décrire la géométrie, en particulier les différentes faces, des verres constitutifs,
- la figure 2 est une vue en coupe transversale, schématique, du vitrage selon la présente invention, et
- la figure 3 est un graphe illustrant le comportement spectral du vitrage de pavillon selon la présente invention comparé au comportement de vitrages de l'art antérieur.

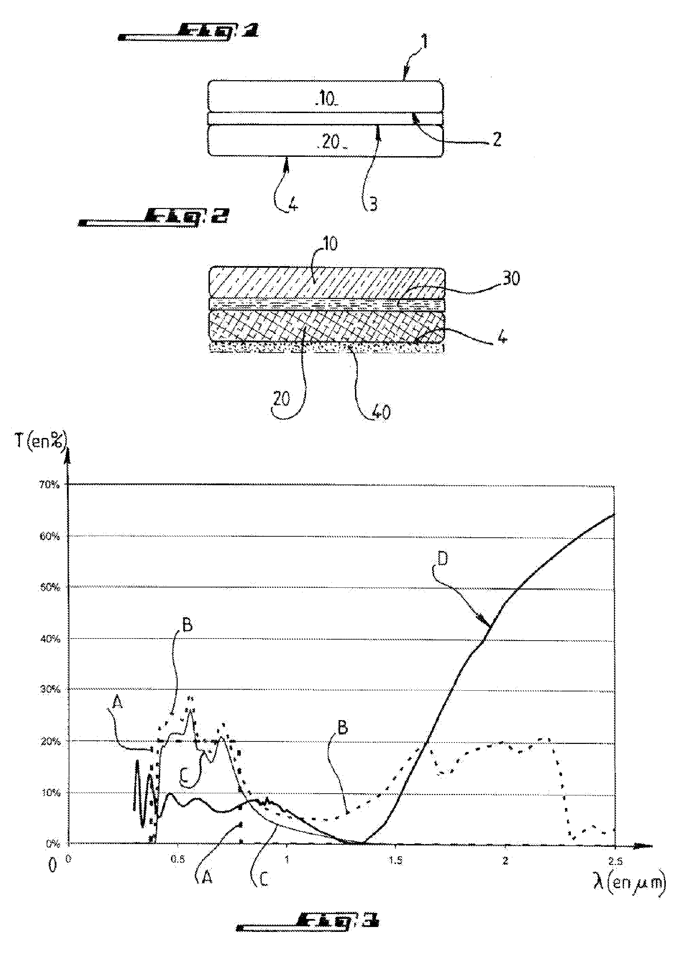

En référence au dessin de la figure 1, on a décrit la géométrie d'un vitrage à deux feuilles de verre, classique, connu de l'art antérieur.

Un tel vitrage comprend un verre extérieur 10 et un verre intérieur 20. La face 1 est la face extérieure du verre extérieur 10, la face 2 est la face opposée du même verre extérieur 10, la face 3 la face du verre intérieur 20 tournée vers le verre extérieur 10 et la face 4 la face intérieure du verre intérieur 20.

Les performances des verres seront exprimées par leur transmission énergétique, désignée TE, et leur transmission lumineuse, désignée TL. Le rapport de la transmission lumineuse sur la transmission énergétique TL/TE - désigné « sélectivité » - constitue un indicateur de performance du verre.

La transmission lumineuse TL s'exprime en % et c'est la quantité de lumière que laisse passer le verre. La somme de la transmission lumineuse, de la réflexion lumineuse et de l'absorption lumineuse d'un verre ou d'un vitrage, est égale à 100%.

La transmission énergétique TE s'exprime aussi en % et c'est le pourcentage de l'énergie, issue du rayonnement solaire, transmise directement par le verre.

Le choix d'un verre « teinté » suppose de sélectionner, parmi les nombreuses références de verres disponibles, le verre ayant des performances énergétiques (exprimées par le coefficient TE) les plus faibles tout en ménageant des performances optiques (exprimées par le coefficient TL) suffisamment élevées de façon à atteindre les résultats souhaités sur le vitrage assemblé final.

En référence à la figure 2, on va maintenant décrire un vitrage à hautes performances thermiques, selon la présente invention.

Ce vitrage, selon l'invention, est composé d'un verre extérieur 10, d'un verre intérieur 20, d'une couche intercalaire 30 entre les deux verres 10 et 20 constituée d'au moins un film à base de PVB absorbant et acoustique, et d'une couche dite « couche à basse émissivité », référencée 40, sur la face intérieure 4 du verre intérieur 20.

Le verre extérieur 10 est un verre teinté avec des performances d'absorption énergétique élevées et une bonne sélectivité (rapport TL/TE élevé). Il s'agit, de préférence d'une plaque de verre la plus mince possible, de façon à contribuer à minimaliser la masse du vitrage assemblé.

Le PVB absorbant de la couche intercalaire 30 est identique à la formulation standard du PVB, en termes de plastifiant et de résine. La différence réside dans l'incorporation de nano particules. Leur taille infime et le fait qu'elles soient inorganiques garantissent une transmission de lumière et une stabilité dans le temps optimisées. Le PVB absorbant utilisé dans la présente invention contient dans sa formulation un ou plusieurs agents absorbant le rayonnement infrarouge proche et/ou moyen. L'épaisseur de la couche intercalaire 30 est choisie de manière à assurer les performances mécaniques, thermiques ou phoniques sur le vitrage final, en recherchant toujours une minimalisation de la masse du vitrage final.

Le verre intérieur 20 est, contrairement au verre extérieur, plutôt un verre clair qui une fois revêtu de la couche basse émissivité se comportera comme un verre teinté lors du formage du vitrage. Il s'agit également, de préférence d'une plaque de verre la plus mince possible, de façon à contribuer à minimaliser la masse du vitrage assemblé.

La couche à basse émissivité 40 permet de réduire l'émissivité de la face intérieure 4 du vitrage. Par « émissivité », on entend la capacité du matériau à émettre de la chaleur de manière radiative. Le coefficient d'émissivité varie en fonction de la longueur d'onde du signal. La couche à basse émissivité 40 de la présente invention est inférieure à celle du verre non traité. La couche 40 présente une émissivité de l'ordre de 20% (+/-5%) pour permettre la suppression de l'occulteur.

Selon des variantes de réalisation de la présente invention, la couche intercalaire 30 à base de PVB absorbant peut assurer d'autres fonctions, comme par exemple, une fonction d'ajustement de la couleur en transmission et de la transmission lumineuse du vitrage final, cet ajustement pouvant être obtenu par le choix d'une teinte spécifique de la couche intercalaire 30.

En variante également, la couche intercalaire 30 peut être constituée de plusieurs films à base de PVB absorbant, acoustique ou teinté, laminés ensemble de manière à ce que ladite couche intercalaire 30 assure les performances mécaniques, thermiques, colorimétriques et phoniques requises pour le vitrage final.

Selon une autre variante de réalisation de l'invention, le verre intérieur 20 n'est pas un verre clair, mais un verre teinté si la couche à basse émissivité 40 ou la couche intercalaire 30 à base de PVB absorbant choisis le nécessitent en vue d'atteindre une transmission lumineuse au niveau souhaité.

A titre d'exemple de réalisation non limitatif de l'objet de la présente invention, le vitrage peut être composé de la manière suivante :

**Tableau I**

| **Composant** | **Nature** |
|---|---|
| Verre extérieur 10 | Verre teinté gris d'épaisseur 2,1mm TL = 29% et TE = 25% |
| PVB absorbant acoustique 30 | PVB Sekisui © SSF d'épaisseur 0,76mm |
| Verre intérieur 20 | Verre clair d'épaisseur 2,1 mm TL = 29% et TE = 25% |
| Couche à basse émissivité 40 | Emissivité 0,20 |
| **Vitrage assemblé** | **TL = 6,7% ; TE = 4,2% ; g = 19,2% ; TTF = 3,77% ; 124 W/m²** |
| Référence « cielo » teinté | TL = 24,0% ; TE = 14,9% ; g = 35,7% ; TTF = 15,5% ; 254 W/m² |

dans laquelle :
TL : transmission lumineuse sous illuminant D65 (cf. ISO 9050),
TE : transmission énergétique, avec « Moon Air Mass » = 2, selon norme ISO 9050 (« Moon Air Mass » étant la masse d'air comme définie par P.Moon),
g : facteur solaire selon la norme ISO 9050 (Air mass 1.5),
TTF : selon la définition de Hisashi Ogawa, Tatsuya Noguchi, Takashi Muromachi, Harunori Murakami, NIPPON SHEET GLASS Co., Ltd, et
Puissance transmise (en W/m²) : sous un rayonnement extérieur selon l'illuminant D65 de 1000 W/ m².

Le PVB Sekusui © SSF (S-Lec®Sound and Solar Film) est un produit à hautes performances fabriqué et commercialisé par la société Sekusui. C'est un exemple de PVB absorbant acoustique : ce produit offre une absorption IR (infrarouge) de 40% supérieure au PVB standard.

La norme ISO 9050 désigne la norme, publiée par l'Organisation Internationale de Normalisation, relative à la détermination de la transmission lumineuse, de la transmission solaire directe, de la transmission énergétique solaire totale, de la transmission de l'ultraviolet et des facteurs dérivés des vitrages.

Comme déjà mentionné précédemment, la présente invention vise, par le choix des teintes, la composition et l'épaisseur des verres et de la couche intercalaire, à obtenir pour le vitrage assemblé une transmission lumineuse permettant la suppression de l'occulteur sans gêne pour les utilisateurs. De manière appropriée, on choisira une transmission lumineuse TL du vitrage complet comprise inférieure à 8%, de façon à éviter d'introduire des conditions de luminosité qui pourraient provoquer un éblouissement.

On notera que le choix d'un vitrage qui comprend une couche à base de PVB absorbant et une couche à basse émissivité permet une grande liberté dans le choix des verres, dont la teinte pourra être choisie de manière à faciliter le bombage des verres constituant le vitrage. En effet, la présence d'une couche à basse émissivité 40 rend le formage du vitrage plus complexe, et notamment l'obtention de formes compatibles pour le verre intérieur 20 et le verre extérieur 10. La présence de la couche à basse émissivité 40 sur le verre inférieur 20 donne à ce dernier un comportement lors de la chauffe très différent du comportement d'un verre classique. Un choix judicieux de la teinte entre le verre extérieur 10 et le verre intérieur 20 prenant en compte les conditions de chauffe dans le four de bombage peut faciliter le formage du vitrage revêtu de la couche à basse émissivité.

Le principe de la présente invention permet une amélioration sensible des performances thermiques du toit « cielo ». Cette amélioration est illustrée par le graphe de la figure 3, sur lequel :
- la courbe A illustre la transmission spectrale d'une configuration théorique idéale correspondant à un vitrage de transmission spectrale prise par exemple de 20% dans les longueurs d'onde visibles, c'est-à-dire les longueurs d'onde entre 0,38 µm et 0,78 µm, et de 0% en dehors de ces longueurs d'onde visibles,
- la courbe B représente la transmission spectrale d'un toit « cielo » de type standard, connu en soi, lequel présente une transmission qui reste importante dans le domaine de l'infrarouge,
- la courbe C représente la transmission spectrale d'un vitrage selon la présente invention, dont la composition peut être celle décrite précédemment dans le tableau I.

En dehors des longueurs d'onde visibles, le but de la présente invention est d'éviter la pénétration de rayonnement infrarouge à l'intérieur du véhicule.

On peut constater sur la courbe C les deux effets suivants, propres à la présente invention :
- d'une part, le rayonnement infrarouge jusqu'à 2,2 µm est presque complètement absorbé à partir d'environ 1,3 µm par le PVB absorbant, complété ou non de l'apport des verres lorsqu'ils sont choisis teintés, et
- d'autre part, au-delà d'environ 1,5 µm, la couche à basse émissivité 40 fait que le rayonnement infrarouge, qui a été absorbé par le PVB et va provoquer un échauffement du vitrage par son absorption, ne chauffe pas ou bien très peu l'habitacle. En effet, le rayonnement infrarouge de plus grande longueur d'onde résultant de l'échauffement du vitrage n'est pas transmit par rayonnement vers l'habitacle du véhicule grâce à la couche à basse émissivité 40, laquelle limite fortement le rayonnement infrarouge du vitrage vers l'intérieur du véhicule.

La conjonction de ces deux effets fonde le principe même de la présente invention, et explique le niveau élevé des performances obtenues.

La présente invention présente de nombreux avantages, parmi lesquels les avantages suivants :
- elle permet d'envisager la suppression du volet occulteur, lequel est aujourd'hui indispensable avec les pavillons « cielos » classique pour isoler l'habitacle par temps très ensoleillé lorsque le rayonnement est fort mais aussi par temps froid lorsque les pertes thermiques sont importantes,
- la suppression du volet occulteur a pour résultats :
   - un gain substantiel en masse et en coût,
   - une réduction de la hauteur du véhicule à « habitabilité » constante,
   - une réduction du maître couple, et donc de la traînée aérodynamique,
   - et enfin, un gain en consommation de carburant du véhicule.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Vitrage à hautes performances thermiques pour un véhicule, en particulier pour un pavillon de véhicule automobile, **caractérisé en ce qu'**il est un vitrage feuilleté composé d'un verre extérieur (10), d'un verre intérieur (20), d'une couche intercalaire (30) entre les deux verres (10, 20) constituée d'au moins un film à base de PVB absorbant, ladite couche intercalaire (30) contenant dans sa formulation au moins un agent absorbant le rayonnement infrarouge proche et/ou moyen et étant pourvue d'une absorption acoustique améliorée par l'utilisation d'un PVB « acoustique » dans sa composition, le verre intérieur (20) étant revêtu sur sa face intérieure (4) d'une couche à basse émissivité (40).

2. Vitrage selon la revendication 1, **caractérisé en ce que** le verre extérieur (10) et le verre intérieur (20) sont des verres teintés.

3. Vitrage selon la revendication 1, **caractérisé en ce que** le verre extérieur (10) et le verre intérieur (20) sont des verres clairs.

4. Vitrage selon l'une quelconque des revendications 1 à 3, **caractérisé en ce que** la couche à basse émissivité (40) présente une émissivité inférieure à 0,85, de préférence inférieure à 0,15.

5. Vitrage selon la revendication 2, **caractérisé en ce que** le verre extérieur (10) est un verre teinté vert, avec les performances suivantes :
- transmission lumineuse (TL) : 79%, et
- transmission énergétique (TE) : 55%.

6. Vitrage selon la revendication 2, **caractérisé en ce que** le verre intérieur (20) est un verre teinté gris foncé, avec les performances suivantes :
- transmission lumineuse (TL) : 29%, et
- transmission énergétique (TE) : 25%.

7. Vitrage selon la revendication 3 ou 7,
**caractérisé en ce que** le verre intérieur (20) est d'épaisseur sensiblement égale à 2,1 mm.

8. Vitrage selon la revendication 3 ou 6,
**caractérisé en ce que** le verre extérieur (10) est d'épaisseur comprise entre 2,1 mm et 3,15 mm.

9. Vitrage selon la revendication 4, **caractérisé en ce que** la couche intercalaire (30) présente une épaisseur suffisante pour assurer les performances mécaniques, thermiques et phoniques requises.

10. Vitrage selon la revendication 1, **caractérisé en ce que** la couche intercalaire (30) est constituée de plusieurs films dont un à base de PVB absorbant, laminés ensemble de manière à ce que ladite couche intercalaire (30) assure les performances mécaniques, thermiques et phoniques requises.

11. Vitrage selon l'une quelconque des revendications 1 et 10, **caractérisé en ce que** la couche intercalaire (30) est pourvue d'une teinte spécifique permettant d'ajuster la couleur en transmission et la transmission lumineuse du vitrage.

12. Véhicule automobile, **caractérisé en ce qu'**il comporte un pavillon dont le vitrage est conforme à l'une quelconque des revendications 1 à 11.
